# EUROPEAN PATENT SPECIFICATION

(11) **EP 1 599 533 B1**
(45) Date of publication and mention of the grant of the patent: **11.02.2009**
(21) Application number: 04713884.7
(22) Date of filing: 24.02.2004
(51) Int. Cl.: C08K 3/34, C08K 9/04, C08K 7/00

(54) **PROCESS FOR THE MANUFACTURE OF NANOCOMPOSITES**
VERFAHREN ZUR HERSTELLUNG VON NANOVERBUNDWERKSTOFFEN
PROCEDE DE FABRICATION DE NANOCOMPOSITES

(30) Priority: 24.02.2003 FR 0302249
(43) Date of publication of application: 30.11.2005
(73) Proprietor: SOLVAY (SOCIETE ANONYME), 1050 Bruxelles (BE)
(72) Inventor: HANNECART, Etienne, B-3080 Tervuren (BE); DUPRAZ, Agnès, F-38160 Saint-Romar (FR); PETRIER, Christian, F-73000 Chambéry (FR)
(74) Representative: Jacques, Philippe
(86) International application number: PCT/EP2004/001848
(87) International publication number: WO 2004/074360

(56) References cited:
- WO-A-00/78540
- US-A- 5 045 588
- US-A- 6 057 396
- US-B1- 6 271 297
- BANDOSZ, T. J. ET AL: "Chemical and structural properties of clay minerals modified by inorganic and organic material" 1992, CLAY MINERALS , 27(4), 435-44 CODEN: CLMIAF; ISSN: 0009-8558 , XP008037143 pages 436,438

## Description

The present invention relates to a process for the manufacture of compositions comprising a lamellar clay and a polymer.

In recent years, much research effort has been invested in the development of nanostructured materials and in-particular of nanocomposites, that is to say of polymers reinforced with a filler of nanoscopic size (that is to say, at least one of the characteristic dimensions of which is of the order of a nanometre, indeed even of tens of nanometres). Such composites find their application in various fields, such as the motor vehicle industry, packaging, flame retardancy, and the like. They exhibit noteworthy properties due to the size and to the high anisotropy of the nanoscopic fillers.

Such fillers are potentially available (that is to say, available with appropriate treatment) in nature in the form of lamellar clays. However, it is advisable to be able to insert polymer chains between the clay platelets and even, preferably, to exfoliate the clay (that is to say, to separate its platelets) in order for it to be able to actually create an ordered structure on the nanoscopic scale. This is because the characteristic dimension on the nanometric scale is, in the case of lamellar fillers, their thickness, provided, of course, that they can be isolated from the aggregates which they naturally form and which are larger in size. In point of fact, clays are hydrophilic substances whereas the majority of polymers are hydrophobic substances. Thus, to ensure that polymer molecules penetrate into the lamellar structure of the clay and break it up generally requires a modification of the clay in order to render it more organophilic.

Thus, in the literature, techniques have been provided which make possible either the modification of the clay with appropriate compounds (typically, , organic surfactants of ammonium or phosphonium type, silanes, and the like) prior to its incorporation into a polymer matrix (in particular during melt processing) or the in situ modification of the clay (during its melt processing) by at least one appropriate substance (swelling agent). Other techniques, such as the polymerization of certain monomers in situ in the modified clay or the direct incorporation of polymers in solution between the clay platelets subsequent to ion exchange phenomena, have also been provided. These techniques generally exhibit the disadvantage of involving a stage of pretreatment of the clay with agents which are generally expensive and/or specific to a given polymer (generally compatible with aqueous media).

Thus, Patent Application WO 00/78540 discloses the use of clays modified with a surfactant (salt of "onium" type) of given formula for the manufacture of nanocomposites using processes in an extruder (melt) or in solution (in conventional solvents). However, this technique is limited to polymers which are readily inserted into the lamellar structure of the clay. In addition, it requires recourse to a separate stage of treatment with specific surfactants.

With regard to Patents US 6 057 396 and US 6 271 297, they disclose a technique which consists in swelling the clay using a swelling agent which preferably comprises a monomer capable of polymerizing in situ between the platelets of the clay during a "reactive" extrusion. This technique is therefore not applicable to the manufacture of any type of nanocomposite since the polymer which has polymerized in situ must be identical to or compatible with that of the matrix of the nanocomposite.

Also, as described in Bandosz et al., Chemical and structural properties of clay minerals modified by inorganic and organic material, Clay Minerals, vol. 27, issue 4, pages 435-444 (1992), furfuryl alcohol is used as intercalant in a smectite clay; the furfuryl alcohol is in situ polymerized and calcined/carbonized between the platelets of the clay for yielding a smectite/microporous carbon composite.

It is an object of the present invention to provide a process which makes it possible to easily obtain nanocomposites comprising a polymer and a lamellar clay impregnated with and/or exfoliated by the polymer without having to modify the clay beforehand, in particular with expensive surfactants, and/or to be limited in the choice of the polymer matrix (as in the case of the reactive extrusion processes).

The present invention consequently relates to a process for the manufacture of nanocomposites comprising at least one lamellar clay and at least one polymer, according to which the clay, the polymer and a bifunctional solvent simultaneously comprising an organophilic group capable of dissolving the polymer and a hydrophilic group capable of reacting with the clay are brought into contact. The term "hydrophilic group capable of reacting with the clay" is intended to denote the functional groups which can interact with the clay and can render it organophilic.

The clay (or inorganic compound based on silica, on alumina and on water) used in the process according to the present invention is a lamellar clay (phyllitic clay). The majority of clays are lamellar and they are generally classified into 3 families : that of kaolin, of mica and of montmorillonite. The clays of the final family, such as montmorillonite proper, beidelite, nontronite, hectorite, saponite and sauconite, also known as smectites, are particularly well suited to the process according to the present invention, montmorillonite itself being preferred.

The polymers used in the process according to the present invention are halogenated polymers, for which the conventional methods of clay impregnation/ exfoliation by means of a solvent are not suitable (as ineffective and/or excessively lengthy). In particular, PVC (poly(vinyl chloride)) and PVDF (poly(vinylidene fluoride)) resins give good results, the latter being particularly preferred. Both homopolymers and copolymers of vinyl chloride, mainly with methyl methacrylate, give good results in the case of PVC. With regard to PVDF, which is particularly preferred, both homopolymers (of vinylidene fluoride) and copolymers with vinyl fluoride, trifluoroethylene, chlorotrifluoroethylene, tetrafluoroethylene, hexafluoropropylene or ethylene give good results. It should also be noted that the process according to the present disclosure also gives good results with biodegradable polymers (such as polycaprolactone) and aromatic polyamides (polyarylamides). Finally, several compatible polymers (that is to say, miscible within a wide range of proportions) can be used in the process according to the present disclosure.

The term "bifunctional solvent" is intended in fact to denote a solvent having at least two functional groups, one of which makes it possible to dissolve the polymer and the other of which makes it possible to interact with the clay and to render it organophilic. The bifunctional solvent used in the process according to the present invention is generally an organic solvent obtained by substituting a solvent for the chosen polymer with a hydrophilic alcohol moiety compatible with the clay. In the case or halogenated polymers, which exhibit a high affinity for polar organic solvents, such a solvent will be substituted, with at least one alcohol. Bifunctional solvents which have given good results, in particular with halogenated polymers, are the organic solvents including a polar heterocycle substituted by one or more groups carrying one or more alcohol functional groups. These substituents can be short-chain (C₁ to C₄) monoalcohols and/or can be C₁-C₈ polyols and/or polymeric polyols (generally with a maximum of 50 monomer units). They are preferably (derivatives of) methanol or ethanol, i.e. hydroxymethyl or hydroxyethyl group. Molecules comprising furan, tetrahydrofuran (THF) or pyrrolidone as polar heterocycle are highly suitable. Furfuryl alcohol and tetrahydrofurfuryl alcohol (furan or THF substituted by hydroxymethyl group) give excellent results, in particular in the case of PV C and of PVDF. In addition, they are common and inexpensive solvents.

In some cases, the solubility of the polymer in the contact medium can be further improved by incorporating therein a monofunctional (unsubstituted) solvent for the polymer. Thus, advantageously, the bifunctional solvent will be used as a mixture with a monofunctional solvent for the polymer. In the case of halogenated polymers, the addition of cyclohexanone to the abovementioned solvents gives good results. It is also possible to seek to further increase the solvent effect by any means generally known for this purpose, for example with vigorous stirring, with ultrasonic radiation, and the like.

The clay, the polymer and the bifunctional solvent can be brought into contact by introducing all the ingredients at the same time into the contact medium, either separately, in any order, or alternatively in various combinations. Thus, first the clay can be treated with the bifunctional solvent (in order to cause it to swell) and then the polymer (optionally in solution also in a solvent, which may or may not be bifunctional) can be added to the mixture. Alternatively, first the polymer can be dissolved in the bifunctional solvent and subsequently the clay can be incorporated in the solution obtained. The latter method gives good results.

The temperature and the duration of the operation in which the clay, the polymer and the bifunctional solvent are brought into contact are chosen according to the nature of the polymer and the parameter which it is desired to optimize. If it is desired to rapidly obtain (for example after a few hours or a few days) the penetration of the polymer into the clay and/or its exfoliation, it is possible, for example, to heat. This is because the fact of operating at a higher temperature (for example at 80°C or more instead of at ambient temperature) makes it possible to accelerate the diffusion phenomena. However, it should be pointed out that in some cases (according to the nature of the polymer and of the bifunctional solvent which are chosen) a high temperature can promote decomposition of the polymer. For the purpose of limiting this decomposition, the heating will preferably be limited. Thus, it will be preferable to operate at a lower temperature, for example at ambient temperature, which will generally involve, however, an increase in the duration of contact (which may then reach several weeks, indeed even several months).

Finally, for the purpose in particular of limiting the decomposition of the polymer, it may prove to be advantageous to carry out the operation in which the clay, the polymer and the bifunctional solvent are brought into contact under a controlled atmosphere (inert gas) and/or in the presence of stabilizers for the polymer and/or in the presence of a cosolvent which is inert with respect to the polymer, such as supercritical CO₂.

The amount of solvent(s) used is preferably suited to the amount of polymer to be dissolved and to the amount of clay to be exfoliated (or impregnated).

Generally, use is made of an amount of solvent(s) at least equal to 5 times that of the polymer by weight and preferably at least equal to 10 times that of the polymer by weight However, care will advantageously be taken not to exceed the amount of solvent(s) strictly necessary for the satisfactory progression of the process, given in particular that the solvent is often removed before the final use of the nanocomposite.

With regard to the polymer/clay proportion in the nanocomposite, this proportion depends on the use targeted. In the majority of the final applications, a concentration of clay of the order of a few % by weight is sufficient. It is in fact rare for the concentration of clay to exceed 10% by weight of the nanocomposite. Consequently, when the final object targeted can be obtained directly from the clay/polymer/bifunctional solvent mixture (for example by simple evaporation of the latter at high temperature, which also has the effect of melting the polymer), the polymer/clay proportion will advantageously be greater than or equal to 10:1, indeed even greater than or equal to 20:1, by weight. In contrast, in the case where the composition according to the present invention acts as concentrate to be diluted during the melt.processing of virgin polymer or during a polymerization, this proportion can become less than or equal to 3:2, indeed even less than or equal to 1:1, by weight

As mentioned above, in the process according to the present invention, the operation in which the clay, the polymer and the bifunctional solvent are brought into contact can be followed:
- by a stage of evaporation of the bifunctional solvent;
- by a stage of separation of the clay and of the polymer, on the one hand, and of the bifunctional solvent, on the other hand, by any appropriate means (filtration, centrifugation, and the like);
- by direct use of the mixture comprising the polymer, the clay and the bifunctional solvent in a process for the polymerization of a polymer identical to or compatible with that which has impregnated and/or exfoliated the clay.

The nanocomposite obtained by the process according to the present invention can be subjected to a melt processing, optionally in conjunction with a polymer identical to or compatible with that which has impregnated and/or exfoliated the clay, this being done in order to manufacture components (finished objects) of given form.

During this processing, care will preferably be taken to adapt the shear conditions so as to obtain a homogeneous distribution of the clay platelets in the polymer matrix.

The present invention is illustrated without implied limitation by the examples and counterexamples described in the following paragraphs. In these, use was made:
- of Bavarian montmorillonite available from IKO (Industriemineralien und Kohlenstoffe GmbH & Co), based on Na/SiMgAl/Fe (4.5%), which can comprise, by way of impurities, traces of silicas and of micas,
- as PVC, of the Solvic® S266RC grade available from Solvay,
- as PVDF, of the Solef® 1010 grade, also available from Solvay.

### Comparative Example 1 (not in accordance with the invention)

1 g of PVC was dissolved in 15 ml of cyclohexanone under hot conditions (150°C). 0.25 g of PEO (poly(ethylene oxide)) and 0.5 g of montmorillonite were subsequently added to the solution and the combined mixture was placed under magnetic stirring. After 18 h, the suspension was filtered and the solid residue was examined by electron microscopy.

Impregnation of the lamellar structure of the montmorillonite by the polymer was observed but no exfoliation (breakup) of this structure was observed.

### Example 2 (in accordance with the invention)

1 g of PVC was dissolved in a mixture of 5 ml of cyclohexanone and of 5 ml of furfuryl alcohol under hot conditions (80°C). 0.5 g of montmorillonite was subsequently added to the solution and the combined mixture was placed under magnetic stirring. After 18 h, the suspension was filtered and the solid residue was examined by electron microscopy.

Impregnation of the lamellar structure of the montmorillonite by the polymer was observed and initiation of exfoliation (breakup) of this structure was also observed.

### Example 3 (in accordance with the invention)

Example 2 was repeated but multiplying the amounts of reactants by 30 and extending the test for a total duration of 6 days.

Not only impregnation but also complete exfoliation of the lamellar structure of the montmorillonite are then observed.

### Example 4 (in accordance with the invention)

1 g of PVDF was dissolved in a mixture of 5 ml of cyclohexanone and of 5 ml of furfuryl alcohol under hot conditions (150°C). 0.5 g of montmorillonite was subsequently added to the solution and the combined mixture was placed under magnetic stirring. After 18 h, the suspension was filtered and the solid residue was examined by electron microscopy.

Impregnation of the lamellar structure of the montmorillonite by the polymer was observed and initiation of exfoliation (breakup) of this structure was also observed.

### Example 5 (in accordance with the invention)

Example 4 was repeated but multiplying the amounts of reactants by 30 and extending the test for a total duration of 6 days.

Not only impregnation but also complete exfoliation of the lamellar structure of the montmorillonite are then observed.

## Claims

1. Process for the manufacture of nanocomposites comprising at least one lamellar clay and at least one halogenated polymer impregnating and/or exfoliating the clay, **characterized in that** the clay, the polymer and a bifunctional solvent simultaneously comprising an organophilic group capable of dissolving the polymer and a hydrophilic group capable of reacting with the clay are brought into contact, said bifunctional solvent being an organic solvent including a polar heterocycle substituted by one or more groups comprising one or more alcohol functional groups.

2. Process according to the preceding claim, **characterized in that** the lamellar clay is a montmorillonite.

3. Process according to the preceding claim, **characterized in that** the polymer is a poly(vinylidene fluoride) (PVDF) resin.

4. Process according to any one of the preceding claims, **characterized in that** the bifunctional solvent is furfuryl alcohol or tetrahydrofurfuryl alcohol.

5. Process according to any one of the preceding claims, **characterized in that** the bifunctional solvent is used as a mixture with a monofunctional solvent for the polymer.

6. Process according to any one of the preceding claims, **characterized in that** the operation in which the clay, the polymer and the bifunctional solvent are brought into contact takes place under a controlled atmosphere and/or in the presence of stabilizers for the polymer and/or in the presence of supercritical CO₂.

7. Process according to any one of the preceding claims, **characterized in that** the operation in which the clay, the polymer and the bifunctional solvent are brought into contact is followed:
- by a stage of evaporation of the bifunctional solvent;
- by a stage of separation of the clay and of the polymer, on the one hand, and of the bifunctional solvent, on the other hand; or
- by direct use of the mixture comprising the polymer, the clay and the bifunctional solvent in a process for the polymerization of a polymer identical to or compatible with that which has impregnated and/or exfoliated the clay.

8. Process according to the preceding claim, **characterized in that** the nanocomposite is subjected to melt processing, optionally in conjunction with a polymer identical to or compatible with that which has impregnated and/or exfoliated the clay.

## Patentansprüche

1. Verfahren zur Herstellung von Nanoverbundwerkstoffen, die mindestens einen schichtförmigen Ton und mindestens ein den Ton imprägnierendes und/oder exfolierendes halogeniertes Polymer umfassen, **dadurch gekennzeichnet, daß** man den Ton, das Polymer und ein bifunktionelles Lösungsmittel, das gleichzeitig eine organophile Gruppe, die zum Lösen des Polymers befähigt ist, und eine hydrophile Gruppe, die zur Reaktion mit dem Ton befähigt ist, enthält, in Berührung bringt, wobei es sich bei dem bifunktionellen Lösungsmittel um ein organisches Lösungsmittel mit einem polaren Heterocyclus, der durch eine oder mehrere Gruppen, die eine oder mehrere Alkoholfunktionen umfassen, substituiert ist, handelt.

2. Verfahren nach dem vorhergehenden Anspruch, **dadurch gekennzeichnet, daß** es sich bei dem schichtförmigen Ton um Montmorillonit handelt.

3. Verfahren nach dem vorhergehenden Anspruch, **dadurch gekennzeichnet, daß** es sich bei dem Polymer um ein Poly(vinylidenfluorid)-Harz (PVDF-Harz) handelt.

4. Verfahren nach einem der vorhergehenden Ansprüche, **dadurch gekennzeichnet, daß** es sich bei dem bifunktionellen Lösungsmittel um Furfurylalkohol oder Tetrahydrofurfurylalkohol handelt.

5. Verfahren nach einem der vorhergehenden Ansprüche, **dadurch gekennzeichnet, daß** man das bifunktionelle Lösungsmittel in Form einer Mischung mit einem monofunktionellen Lösungsmittel für das Polymer verwendet.

6. Verfahren nach einem der vorhergehenden Ansprüche, **dadurch gekennzeichnet, daß** der Arbeitsgang, bei dem man den Ton, das Polymer und das bifunktionelle Lösungsmittel in Berührung bringt, unter einer kontrollierten Atmosphäre und/oder in Gegenwart von Stabilisatoren für das Polymer und/oder in Gegenwart von überkritischem CO₂ erfolgt.

7. Verfahren nach einem der vorhergehenden Ansprüche, **dadurch gekennzeichnet, daß** auf den Arbeitsgang, bei dem man den Ton, das Polymer und das bifunktionelle Lösungsmittel in Berührung bringt:
- eine Stufe der Verdampfung des bifunktionellen Lösungsmittels;
- eine Stufe der Trennung des Tons und des Polymers einerseits und des bifunktionellen Lösungsmittels andererseits oder
- die direkte Verwendung der Mischung, die das Polymer, den Ton und das bifunktionelle Lösungsmittel umfaßt, bei einem Verfahren zur Polymerisation eines Polymers, das mit demjenigen, das den Ton imprägniert und/oder exfoliert hat, identisch oder verträglich ist,
folgt.

8. Verfahren nach dem vorhergehenden Anspruch, **dadurch gekennzeichnet, daß** man den Nanoverbundwerkstoff einer Schmelzeverarbeitung unterwirft, gegebenenfalls in Verbindung mit einem Polymer, das mit demjenigen, das den Ton imprägniert und/oder exfoliert hat, identisch oder verträglich ist.

## Revendications

1. Procédé pour la fabrication de nanocomposites comprenant au moins une argile lamellaire et au moins un polymère halogéné **caractérisé en ce qu'**on met en contact l'argile, le polymère et un solvant bifonctionnel comprenant à la fois un groupement organophile susceptible de dissoudre le polymère et un groupement hydrophile susceptible de réagir avec l'argile, ledit solvant bifonctionnel étant un solvant organique incluant un hétérocycle polaire substitué par un ou plusieurs groupements comprenant une ou plusieurs fonctions alcool.

2. Procédé selon la revendication précédente, **caractérisé en ce que** l'argile lamellaire est une montmorillonite.

3. Procédé selon l'une quelconque des revendications précédentes, **caractérisé en ce que** le polymère est une résine PVDF.

4. Procédé selon l'une quelconque des revendications précédentes, **caractérisé en ce que** le solvant bifonctionnel est l'alcool furfurylique ou tétrahydrofurfurylique.

5. Procédé selon l'une quelconque des revendications précédentes, **caractérisé en ce que** le solvant bifonctionnel est utilisé en mélange avec un solvant monofonctionnel du polymère.

6. Procédé selon l'une quelconque des revendications précédentes, **caractérisé en ce que** la mise en contact de l'argile, du polymère et du solvant bifonctionnel a lieu sous atmosphère contrôlée et/ou en présence de stabilisants du polymère et/ou en présence de CO₂ supercritique.

7. Procédé selon l'une quelconque des revendications précédentes, **caractérisé en ce que** la mise en contact de l'argile, du polymère et du solvant bifonctionnel est suivie :
- d'une étape d'évaporation du solvant bifonctionnel ;
- d'une étape de séparation de l'argile et du polymère d'une part, et du solvant bifonctionnel d'autre part ; ou
- d'une utilisation directe du mélange comprenant le polymère, l'argile et le solvant bifonctionnel dans un procédé de polymérisation d'un polymère identique ou compatible avec celui qui a imprégné et/ou exfolié l'argile.

8. Procédé selon la revendication précédente, **caractérisé en ce que** le nanocomposite est soumis à une mise en oeuvre par fusion, éventuellement conjointement avec un polymère identique ou compatible avec celui qui a imprégné et/ou exfolié l'argile.
